# EUROPÄISCHE PATENTANMELDUNG

(11) **EP 0 775 614 A2**
(43) Veröffentlichungstag der Anmeldung: **28.05.1997**
(21) Anmeldenummer: 96118274.8
(22) Anmeldetag: 14.11.1996
(51) Int. Cl.: B60R 21/16

(54) **Doppelkammer-Gassack für ein Fahrzeuginsassen-Rückhaltesystem**

(30) Priorität: 24.11.1995 DE 29518651 U
(71) Anmelder: TRW Occupant Restraint Systems GmbH, 73553 Alfdorf (DE)
(72) Erfinder: Wäldchen, Ralf, 73527 Schwäbisch Gmünd (DE); Fruck, Klaus, 73525 Schwäbisch Gmünd (DE); Bosio, Allen, 73575 Leinzell (DE)
(74) Vertreter: Degwert, Hartmut, Dipl.-Phys.

(57) **Zusammenfassung**

Die Erfindung betrifft einen Doppelkammer-Gassack (10) für ein Fahrzeuginsassen-Rückhaltesystem, mit einer ersten Kammer (12) und einer mit dieser in Strömungsverbindung stehenden zweiten Kammer (14). Gemäß der Erfindung ist vorgesehen, daß der Gassack (10) besteht aus einem oberen Gewebelappen (16), einem unteren Gewebelappen (18), dessen Außenumfang mit dem Außenumfang des oberen Gewebelappens (16) verbunden ist, und einem mittleren Gewebelappen (20), dessen Außenumfang mit dem oberen Gewebelappen (16) und dessen mittlerer Abschnitt mit dem unteren Gewebelappen (18) verbunden ist.

## Beschreibung

Die Erfindung betrifft einen Doppelkammer-Gassack für ein Fahrzeuginsassen-Rückhaltesystem, mit einer ersten Kammer und einer mit dieser in Strömungsverbindung stehenden zweiten Kammer.

Die Funktion eines solchen Gassacks besteht darin, bei einem Fahrzeugunfall die Vorwärtsverlagerung des Fahrzeuginsassen relativ zum Fahrzeug auf möglichst sanfte Weise zu begrenzen. Zu diesem Zweck wird der Gassack im Bedarfsfall ausgehend von einem zusammengefalteten Ruhezustand in einen entfalteten Aktivzustand durch unter Druck stehendes Gas überführt, welches von einer Aufblasvorrichtung bereitgestellt wird.

Die Aufgabe der Erfindung besteht darin, einen Doppelkammer-Gassack der eingangs genannten Art zu schaffen, der besonders einfach zu fertigen ist und dessen Entfaltungsvorgang, Verhalten nach dem Entfalten sowie Gestalt im aufgeblasenen Zustand in vielfältiger Weise auf die jeweiligen Einsatzbedingungen im Fahrzeug abgestimmt werden können.

Diese Aufgabe wird bei einem Doppelkammer-Gassack der eingangs genannten Art dadurch gelöst, daß der Gassack aus einem ersten äußeren Gewebelappen und einem zweiten äußeren Gewebelappen besteht, dessen Außenumfang mit dem Außenumfang des ersten äußeren Gewebelappens verbunden ist, und aus einem inneren Gewebelappen, dessen Außenumfang mit dem ersten äußeren Gewebelappen und dessen mittlerer Abschnitt mit dem zweiten äußeren Gewebelappen verbunden ist, wobei die erste Kammer zwischen dem ersten äußeren Gewebelappen und dem inneren Gewebelappen und die zweite Kammer zwischen dem inneren Gewebelappen und dem zweiten äußeren Gewebelappen gebildet ist. Die zweite Kammer ist vorzugsweise ringförmig und umgibt die erste Kammer. Diese Gestaltung ermöglicht eine besonders einfache Herstellung des erfindungsgemäßen Doppelkammer-Gassacks, während gleichzeitig eine hohe Freiheit hinsichtlich der konstruktiven Auslegung des Gassacks bestehenbleibt.

Weitere Merkmale eines erfindungsgemäßen Doppelkammer-Gassackes ergeben sich aus den Unteransprüchen.

Die Erfindung wird nachfolgend unter Bezugnahme auf die beigefügte Zeichnung beschrieben. In dieser zeigen:
- Fig. 1 einen schematischen Querschnitt durch einen Doppelkammer-Gassack gemäß einer ersten Ausführungsform der Erfindung;
- Fig. 2 einen schematischen Querschnitt durch einen Doppelkammer-Gassack gemäß einer zweiten Ausführungsform der Erfindung;
- Fig. 3 eine Variante der Ausführungsform von Fig. 2; und
- Fig. 4 eine schematische Draufsicht auf die verschiedenen Gewebelappen eines Gassacks gemäß einer dritten Ausführungsform der Erfindung.

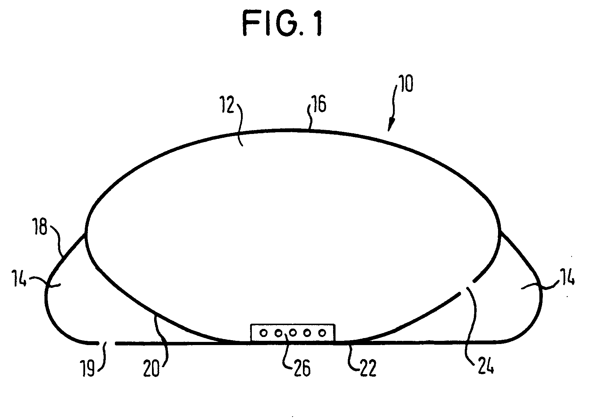

In Fig. 1 ist schematisch ein Doppelkammer-Gassack 10 gemäß einer ersten Ausführungsform der Erfindung dargestellt. Dieser Gassack 10 enthält eine erste Kammer 12 und eine zweite Kammer 14, die allgemein ringförmig um die erste Kammer herum angeordnet ist. Die beiden Kammern sind gebildet durch einen allgemein kreisförmigen oberen Gewebelappen 16, dessen Außenumfang mit dem Außenumfang eines allgemein kreisförmigen unteren Gewebelappens 18 verbunden ist. Zwischen dem oberen und dem unteren Gewebelappen 16, 18 ist ein mittlerer Gewebelappen 20 angeordnet, dessen Außenumfang mit dem oberen Gewebelappen 16 und dessen mittlerer Abschnitt 22 mit dem unteren Gewebelappen 18 verbunden ist. Somit ist die erste Kammer 12 von der zweiten Kammer 14 durch den mittleren Gewebelappen 20 getrennt. Der mittlere Gewebelappen 20 weist eine schematisch dargestellte Überströmöffnung 24 auf, über die die erste Kammer 12 mit der zweiten Kammer 14 in Strömungsverbindung steht, und der untere Gewebelappen 18 weist eine schematisch dargestellte Ausströmöffnung 19 auf, über die die zweite Kammer 14 mit der Außenumgebung des Gassacks in Strömungsverbindung steht. Im Inneren der ersten Kammer ist schließlich eine Aufblasvorrichtung 26 angeordnet, welche nach Zündung durch eine (nicht dargestellte) geeignete Auslösesensorik eine vorbestimmte Menge von unter Druck stehendem Gas bereitstellt. Nach der Zündung der Aufblasvorrichtung 26 strömt das erzeugte Gas zuerst in die erste Kammer 12 und dann aus dieser durch die Überströmöffnung 24 in die zweite Kammer 14. Aus der zweiten Kammer 14 kann das unter Druck stehende Gas schließlich durch die Ausströmöffnung 19 aus dem Gassack herausströmen.

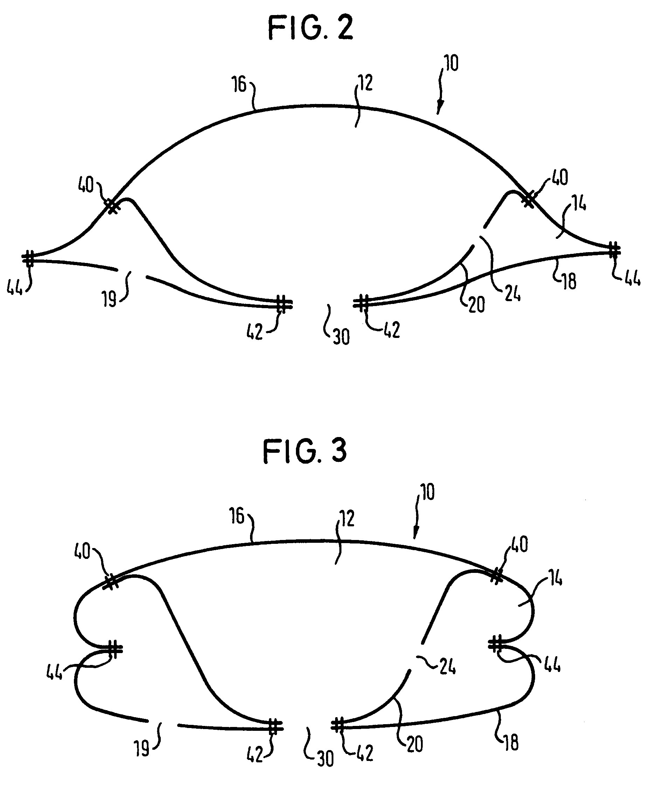

In Fig. 2 ist ein Doppelkammer-Gassack 10 gemäß einer zweiten Ausführungsform der Erfindung dargestellt. Hinsichtlich der einzelnen Bestandteile dieses Doppelkammer-Gassacks 10 wird auf die Erläuterung zu Fig. 1 verwiesen. Der wesentliche Unterschied des Doppelkammer-Gassacks 10 gemäß der zweiten Ausführungsform gegenüber demjenigen der ersten Ausführungsform besteht darin, daß bei dem Doppelkammer-Gassack 10 der zweiten Ausführungsform eine für das Aufblasen des Gassacks vorgesehene Aufblasvorrichtung nicht im Inneren des Gassacks angeordnet ist. Statt dessen weist die erste Kammer 12 eine Einblasöffnung 30 auf, die mit einer (nicht dargestellten) geeigneten Aufblasvorrichtung in Strömungsverbindung steht. Diese Einblasöffnung 30 erstreckt sich durch das Gewebe des unteren und das des mittleren Gewebelappens 18 bzw. 20 hindurch. Der Aufblasvorgang entspricht auch bei diesem Doppelkammer-Gassack dem mit Bezug auf Fig. 1 beschriebenen Aufblasvorgang: Das im Bedarfsfall erzeugte, unter Druck stehende Gas strömt zuerst in die erste Kammer 10 und aus dieser in die zweite Kammer 12. Aus der zweiten Kammer 12 kann es durch die Ausströmöffnung 19 austreten.

Der Doppelkammer-Gassack wird in der folgenden Weise hergestellt: Zuerst wird der geeignet geschnittene mittlere Gewebelappen 20 mit dem oberen Gewebelappen 16 und dem unteren Gewebelappen 18 verbunden. Dies geschieht, indem der Außenumfang des mittleren Gewebelappens 20 mittels einer entlang diesem Außenumfang verlaufenden Naht 40 mit dem oberen Gewebelappen 16 vernäht wird und indem der Berandungsbereich der Einblasöffnung 30 des mittleren Gewebelappens 20 mittels einer entlang diesem Berandungsbereich verlaufenden Naht 42 mit dem Berandungsbereich der Einblasöffnung 30 des unteren Gewebelappens 18 vernäht wird. Danach wird der Außenumfang des oberen Gewebelappens 16 mit dem Außenumfang des unteren Gewebelappens 18 mittels einer Naht 44 vernäht.

In Fig. 3 ist eine Variante zur Ausführungsform von Fig. 2 dargestellt. Der in Fig. 3 dargestellte Doppelkammer-Gassack 10 unterscheidet sich von dem in Fig. 2 dargestellten Doppelkammer-Gassack nur hinsichtlich der Reihenfolge, mit der die verschiedenen Gewebelappen miteinander vernäht werden. Bei dem Doppelkammer-Gassack 10 von Figur 3 wird zuerst der Außenumfang des mittleren Gewebelappens 20 mit dem oberen Gewebelappen 16 vernäht. Dann wird der Außenumfang des unteren Gewebelappens 18 so mit dem Außenumfang des oberen Gewebelappens 16 vernäht, daß der untere Gewebelappen 18 bezüglich des oberen Gewebelappens 16 auf der zum mittleren Gewebelappen 20 entgegengesetzten Seite liegt. Danach wird der Gassack umgestülpt, so daß der bis dahin außerhalb des Gassacks liegende mittlere Gewebelappen 20 im Inneren des Doppelkammer-Gassacks 10 zu liegen kommt. Zum Schluß wird der Berandungsbereich der Einblasöffnung 30 des mitteren Gewebelappens 20 mit dem Berandungsbereich der Einblasöffnung 30 des unteren Gewebelappens 18 vernäht.

Durch die erfindungsgemäße Ausgestaltung des Doppelkammer-Gassacks 10 ergeben sich die folgenden Vorteile: Durch die spezielle Anordnung der ersten Kammer 12 relativ zur zweiten Kammer 14 ergibt sich eine besonders hohe Formstabilität des Doppelkammer-Gassacks 10, ohne daß Fangbänder notwendig sind. Gleichzeitig ergibt sich eine vergleichsweise tiefe erste Kammer. Schließlich kann das Aufblasverhalten, die sich während des Aufblasens einstellende Härte jeder Kammer sowie der zeitliche Ablauf des Aufblasens der ersten und der zweiten Kammer 12, 14 durch geeignete Auswahl der folgenden Parameter an die jeweiligen Einsatzbedingungen angepaßt werden: Verhältnis des Volumens der ersten Kammer 12 zur zweiten Kammer 14, Gasdurchlaßvermögen der Überströmöffnung 24 und Gasdurchlaßvermögen der Auslaßöffnung 19. Es ist offensichtlich, daß anstelle der dargestellten jeweils einfach vorhandenen Überströmöffnung 24 bzw. Auslaßöffnung 19 auch mehrere Überströmöffnungen und mehrere Auslaßöffnungen vorgesehen sein können.

In einer nicht dargestellten Weiterbildung eines erfindungsgemäßen Doppelkammer-Gassacks ist vorgesehen, daß der mittlere Gewebelappen 20 und der untere Gewebelappen 18 aus Gewebe mit definiertem Gasdurchlässigkeitsverhalten bestehen. Somit kann auf die Überströmöffnung 24 im mittleren Gewebeteil 20 und die Auslaßöffnung 19 im unteren Gewebeteil 18 verzichtet werden. Das Aufblasverhalten des Doppelkammer-Gassacks kann dann durch eine geeignete Auswahl der Gasdurchlässigkeit des mittleren und des unteren Gewebelappens beeinflußt werden.

Da für das Verbinden der Gewebelappen miteinander eine einfach auszubildende Naht verwendet wird, ist der erfindungsgemäße Doppelkammer-Gassack in besonders einfacher Weise zu fertigen. Wenn außerdem gemäß der nicht dargestellten Weiterbildung für den mittleren Gewebelappen 20 und den unteren Gewebelappen 18 gasdurchlässige Gewebe verwendet werden, wird die Herstellung des Doppelkammer-Gassacks weiter vereinfacht, da keine Überström- oder Ausströmöffnungen ausgebildet werden müssen.

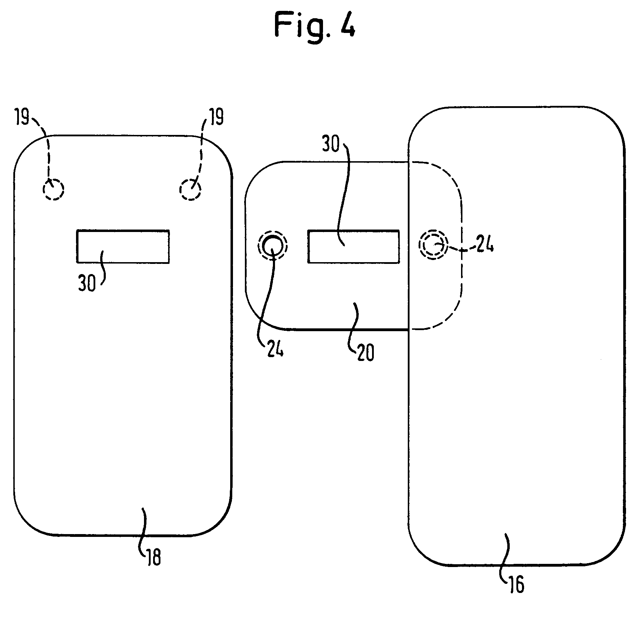

In Figur 4 sind in einer schematischen Draufsicht der obere Gewebelappen 16, der untere Gewebelappen 18 und der mittlere Gewebelappen 20 eines Gassacks gemäß einer dritten Ausführungsform der Erfindung dargestellt. Diese Ausführungsform entspricht weitestgehend der ersten und der zweiten Ausführungsform. Im Gegensatz zur ersten und zur zweiten Ausführungsform, bei der runde Gewebelappen verwendet werden, sind bei der dritten Ausführungsform allerdings rechteckige Gewebelappen vorgesehen. Dies ist insbesondere für einen Beifahrer-Gassack vorteilhaft.

## Patentansprüche

1. Doppelkammer-Gassack (10) für ein Fahrzeuginsassen-Rückhaltesystem, mit einer ersten Kammer (12) und einer mit dieser in Strömungsverbindung stehenden zweiten Kammer (14), dadurch gekennzeichnet, daß der Gassack (10) besteht aus einem ersten äußeren Gewebelappen (16), einem zweiten äußeren Gewebelappen (18), dessen Außenumfang mit dem Außenumfang des ersten äußeren Gewebelappens (16) verbunden ist, und einem inneren Gewebelappen (20), dessen Außenumfang mit dem ersten äußeren Gewebelappen (16) und dessen mittlerer Abschnitt mit dem zweiten äußeren Gewebelappen (18) verbunden ist, wobei die erste Kammer (12) zwischen dem ersten äußeren Gewebelappen und dem inneren Gewebelappen und die zweite Kammer (14) zwischen dem inneren Gewebelappen und dem zweiten äußeren Gewebelappen gebildet ist.

2. Gassack nach Anspruch 1, dadurch gekennzeichnet, daß die Gewebelappen (16, 18, 20) eine allgemein kreisförmige Gestalt haben.

3. Gassack nach Anspruch 1, dadurch gekennzeichnet, daß die Gewebelappen (16, 18, 20) eine allgemein rechteckige Gestalt haben.

4. Gassack nach einem der vorhergehenden Ansprüche, dadurch gekennzeichnet, daß die zweite Kammer (14) ringförmig ist und die erste Kammer (12) umgibt.

5. Gassack nach einem der vorhergehenden Ansprüche, dadurch gekennzeichnet, daß der innere Gewebelappen (20) gasdurchlässig ist, so daß die zweite Kammer (14) durch das Gewebe des inneren Gewebelappens (20) hindurch befüllbar ist.

6. Gassack nach einem der vorhergehenden Ansprüche, dadurch gekennzeichnet, daß in dem inneren Gewebelappen (20) eine Überströmöffnung (24) ausgebildet ist, durch welche die zweite Kammer (14) befüllbar ist.

7. Gassack nach einem der vorhergehenden Ansprüche, dadurch gekennzeichnet, daß der zweite äußere Gewebelappen (18) gasdurchlässig ist.

8. Gassack nach einem der vorhergehenden Ansprüche, dadurch gekennzeichnet, daß der zweite äußere Gewebelappen eine Ausströmöffnung (19) aufweist.

9. Gassack nach einem der vorhergehenden Ansprüche, dadurch gekennzeichnet, daß im Inneren der ersten Kammer (12) eine Aufblasvorrichtung (26) angeordnet ist.

10. Gassack nach einem Ansprüche 1 bis 8, dadurch gekennzeichnet, daß die erste Kammer (12) eine Einblasöffnung (30) aufweist.
